# FASCICULE DE BREVET EUROPEEN

(11) **EP 1 736 362 B1**
(45) Date de publication et mention de la délivrance du brevet: **06.08.2008**
(21) Numéro de dépôt: 06300556.5
(22) Date de dépôt: 02.06.2006
(51) Int. Cl.: B60R 7/02, B60R 5/04

(54) **Dispositif escamotable pour compartimenter une zone de chargement de véhicule automobile et véhicule correspondant**
Einklappbare Vorrichtung um den Laderaum eines Kraftfahrzeugs zu teilen und dementsprechendes Kraftfahrzeug
Collapsible mechanism for partitioning the load compartment of a motor vehicle and corresponding motor vehicle

(30) Priorité: 20.06.2005 FR 0551668
(43) Date de publication de la demande: 27.12.2006
(73) Titulaire: Renault SAS, 92100 Boulogne Billancourt (FR)
(72) Inventeur: Legrand, Jean-Pierre, 28300, Bercheres Saint Germain (FR)

(56) Documents cités:
- US-A- 5 340 183
- US-A- 6 053 553
- US-A1- 2004 020 957

## Description

L'invention concerne les agencements de coffre et en particulier, un dispositif escamotable pour compartimenter une zone de chargement de véhicule automobile et un véhicule correspondant.

US 2004/00 20 957 décrit un dispositif selon le préambule de la revendication 1.

De tels dispositifs de compartimentage sont particulièrement utiles dans les zones de stockage du véhicule, comme le coffre, où ils permettent de stocker des produits conditionnés à l'unité, par exemple des bouteilles, et d'éviter le déplacement de tels produits.

Afin de conserver un volume de stockage maximum, malgré la présence de ce genre de dispositifs, le document FR-2 833 549 décrit un dispositif de compartimentage escamotable dans la paroi latérale du coffre. Ce dispositif comprend une cloison mobile encastrée en position escamotée dans une empreinte située dans une paroi latérale du coffre. La cloison mobile du dispositif est articulée au véhicule par un jeu de bielles permettant son déplacement vers une position d'utilisation. Ce dispositif présente toutefois l'inconvénient d'être assez complexe et coûteux à réaliser.

Par ailleurs, le document FR-2 832 368 décrit un dispositif de compartimentage comprenant un panneau transversal de cloisonnement, mobile longitudinalement à l'intérieur d'une zone de chargement, et deux organes longitudinaux de cloisonnement associés audit panneau par une première extrémité, la seconde extrémité des organes étant montée articulée à l'intérieur d'un compartiment de rangement. Cependant ce dispositif est encombrant puisqu'en position de rangement la largeur du dispositif résulte des épaisseurs additionnées des deux organes longitudinaux et du panneau transversal. Il en résulte que l'aspect esthétique perçu par un utilisateur est dégradé.

Ainsi, l'objet de l'invention est un dispositif escamotable pour compartimenter une zone de chargement de véhicule automobile perfectionné.

A cet effet, l'invention fournit un tel dispositif comprenant une première cloison montée articulée sur une paroi du véhicule autour d'un axe vertical entre une position déployée dans laquelle elle s'étend à l'intérieur de la zone de chargement et une position repliée de rangement caractérisé en ce qu'il comporte une deuxième cloison montée articulée à une de ses extrémités sur la première cloison, et une troisième cloison montée articulée à une de ses extrémités sur la seconde cloison et en ce que la première cloison comporte un logement apte à recevoir la deuxième cloison et la troisième cloison lorsque la première cloison est en position repliée de rangement.

Selon les caractéristiques de l'invention :
- la deuxième cloison comprend un logement apte à recevoir la troisième cloison,
- l'autre extrémité de la troisième cloison est montée articulée sur la paroi interne du véhicule,
- la première extrémité de la première cloison et la deuxième extrémité de la troisième cloison sont montées articulées sur la paroi par des moyens démontables,
- en position déployée, les trois cloisons délimitent un compartiment en forme de rectangle,
- il comprend des moyens de verrouillage du dispositif dans la position déployée se situant au moins au niveau d'une des articulations,
- il comprend des moyens de retenue élastique d'objets comprenant des moyens de fixation à chacune de ses extrémités apte à se verrouiller sur au moins une des cloisons.

Enfin, l'invention concerne aussi un véhicule automobile comportant au moins un tel dispositif, ledit dispositif étant monté de manière à pivoter entre une position repliée de rangement contre une paroi interne ou dans un évidemment de forme sensiblement correspondante aménagé dans la paroi interne et une position déployée dans laquelle il s'étend à l'intérieur de la zone de chargement et au moins au dessus d'une surface sensiblement horizontale du véhicule adjacente à la paroi interne.

De préférence, le dispositif est monté sur la paroi interne de sorte que, dans la position repliée de rangement, les cloisons s'étendent sensiblement parallèlement à la paroi interne.

Avantageusement, il peut comprendre au moins un autre dispositif de compartimentage monté à articulation sur une paroi de la zone de chargement située à l'opposé de la paroi pourvue du premier dispositif, les dispositifs de compartimentage, sensiblement identiques, étant agencés de manière à pouvoir être reliés entre eux dans leur position déployée par au moins un élément de liaison.

L'invention est maintenant décrite en référence aux dessins annexés, non limitatifs dans lesquels :
- la figure 1 est une représentation en perspective d'un dispositif selon l'invention en position repliée de rangement,
- la figure 2 est une vue similaire du dispositif selon l'invention en position intermédiaire,
- la figure 3 est une vue similaire du dispositif selon l'invention en position déployée,
- la figure 4 est une section selon le plan A-A de la figure 1 en position repliée de rangement, et
- la figure 5 est une représentation en perspective de deux dispositifs selon l'invention en position déployée.
   On définit les termes avant et arrière par rapport à la direction longitudinale du véhicule, l'avant désignant le sens de déplacement normal du véhicule, et l'arrière le sens opposé.

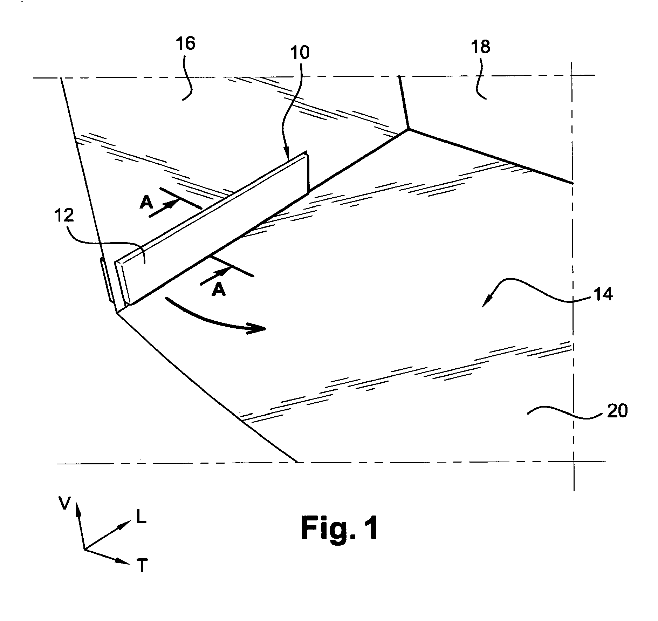

La figure 1 représente une zone de chargement 14 qui est un coffre arrière de véhicule automobile comprenant le dispositif escamotable de compartimentage selon l'invention en position repliée de rangement. Plus précisément, le dispositif est fixé sur une paroi latérale 16. La zone de chargement 14 comprend, en outre, une paroi avant 18 constituée par le dos du dossier d'une banquette arrière et une surface de chargement 20.

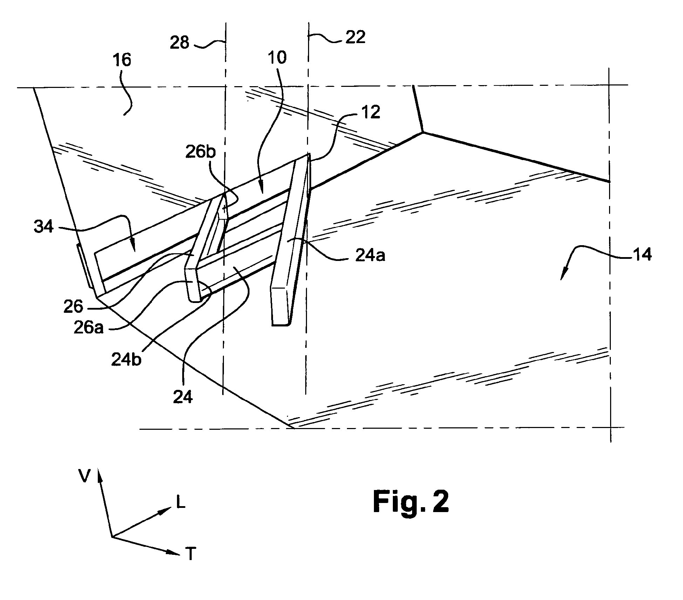

Tel que référencé sur la figure 2, le dispositif 10 comprend une première cloison 12 qui est de préférence rigide et de longueur, par exemple, égale à la moitié de l'encombrement transversal de la zone de chargement 14. Elle est montée articulée sur la paroi interne 16 autour d'un axe 22 entre une position déployée dans laquelle elle s'étend à l'intérieur de la zone de chargement 14 et une position repliée de rangement. Lors de son déploiement dans le sens inverse au sens horaire, la première cloison 12 entraîne avec elle une deuxième cloison 24 et une troisième cloison 26. La deuxième cloison 24 est montée articulée à une première extrémité 24a sur la première cloison, par exemple, en son milieu et à une deuxième extrémité 24b au niveau d'une première extrémité 26a de la troisième cloison 26. Sa deuxième extrémité 26b, quant à elle, est montée articulée sur la paroi interne 16 autour d'un axe 28.

Afin d'offrir une paroi 16 totalement propre, le dispositif 10 en position repliée se range dans un évidemment 34 de forme sensiblement correspondante aménagé dans la paroi interne 16. La forme de ce logement est, de préférence, sensiblement complémentaire de celle de la cloison 12 en longueur et de celle des ses rebords en profondeur afin de limiter l'encombrement de cet évidemment 34 dans la paroi 16 du véhicule.

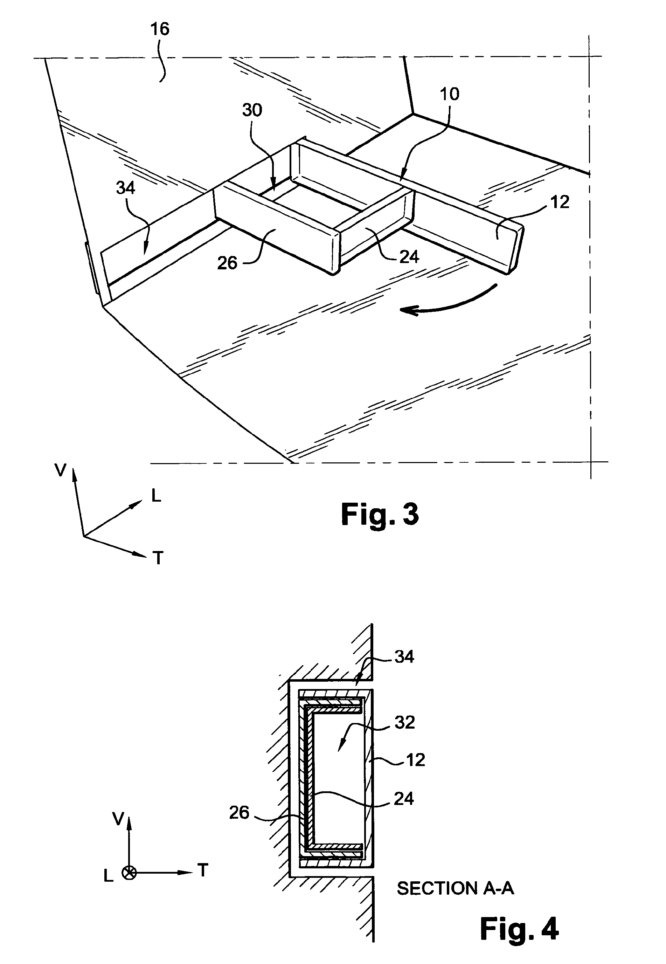

Le dispositif 10, en position déployée, tel que représenté sur la figure 3, délimite un compartiment 30 de forme rectangulaire apte à recevoir des objets de toute forme. En effet, les cloisons 12 et 26 se trouvent sensiblement perpendiculaire à la paroi 16 et la cloison 24 sensiblement parallèle à cette dernière. Le dispositif comprend, en outre, des moyens de verrouillage connus (non représentés) de manière à le maintenir dans cette position. Ces moyens se trouvent au niveau au moins d'une articulation et, par exemple, au niveau de l'axe d'articulation 22.

Pour passer de la position déployée à la position repliée de rangement, l'utilisateur doit faire pivoter la première cloison 12 autour de son axe 22 dans le sens horaire jusqu'à ce qu'elle se trouve sensiblement parallèle à la paroi 16. Lors de ce déplacement, la deuxième cloison 24 est reçue dans un logement de la troisième cloison 26 et cet ensemble, constitué par ces deux cloisons, est reçu dans un logement 32 de la première cloison 12.

En effet, le mérite de l'invention repose sur le fait qu'au moins la première cloison 12 et la troisième cloison 26 présentent une section en U, c'est-à-dire qu'elles comportent des rebords perpendiculaires orientés dans un même sens sur tout leur pourtour, comme l'illustration en est faite sur la figure 4 représentant une section selon le plan A-A du dispositif en position repliée de rangement. Pour la faisabilité de ce dispositif 10, la cloison 24 présente une largeur de dimension inférieure à celle de la cloison 26. Par ailleurs, la cloison 26 possède une largeur et des rebords de dimensions inférieures à celles de la cloison 12. Le dispositif 10, en position repliée de rangement, est donc compact et léger.

Avantageusement, la première extrémité de la première cloison 12 et la deuxième extrémité 26b de la troisième cloison 26 sont montées articulées sur la paroi par des moyens démontables (non représentés) afin de permettre le transport du dispositif 10. Ces moyens peuvent, par exemple, être constitués d'ergots escamotables, respectivement parallèles à l'axe 22 et à l'axe 28, présents de part et d'autre de ces extrémités qui correspondent avec des formes complémentaires présentes dans l'évidemment 34 de la paroi 16.

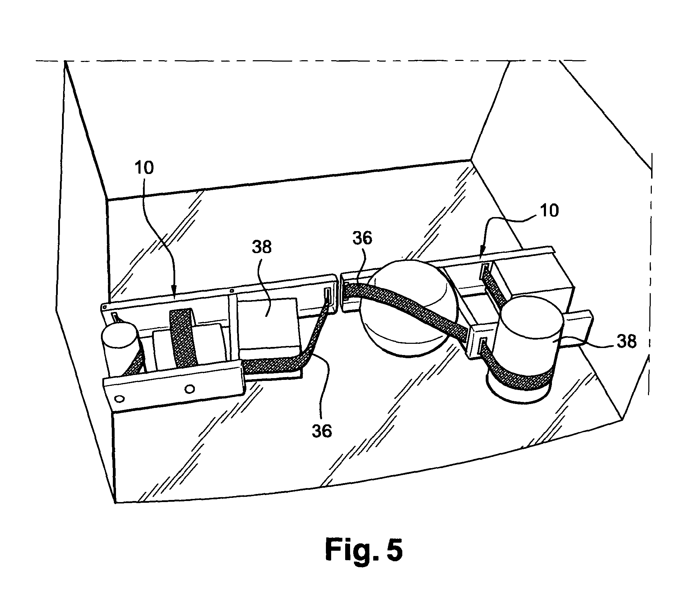

Dans un exemple de réalisation de l'invention illustré sur la figure 5, deux dispositifs de compartimentage selon l'invention dans une position déployée sont représentés en perspective de dessus. Ces deux dispositifs 10 sont montés sur des parois latérales opposées de la zone de chargement 14 et sont agencés de manière à pouvoir être reliés entre eux par au moins un élément de liaison (non représenté). Ainsi, la zone de chargement 14 est divisée transversalement en deux zones distinctes.

Avantageusement, des moyens de retenue élastiques 36 sont prévus pour maintenir les objets 38 en position lors d'un transport. Ces moyens 36 sont des sangles munies de moyens de fixation à chaque extrémité aptes à se verrouiller sur les cloisons 12, 24, 26. Il s'agit, par exemple, d'embouts aptes à se solidariser aux cloisons grâce à des encoches. A titre illustratif, une même sangle 36 peut être fixée à chaque extrémité sur une même cloison.

Bien entendu, l'invention n'est pas limitée au mode de réalisation ci-dessus décrits et représentés qui n'a été donné qu'à titre d'exemple. C'est ainsi que le dispositif peut être monté dans n'importe quelle zone plane de l'habitacle nécessitant un compartimentage. C'est ainsi encore que les cloisons peuvent être de toute longueur à la condition près qu'elle respecte le fait que le dispositif soit escamotable entièrement dans la cloison 12.

## Revendications

1. Dispositif escamotable (10) pour le compartimentage d'une zone de chargement (14) de véhicule automobile comprenant une première cloison (12) montée articulée sur une paroi (16) du véhicule autour d'un axe vertical (22) entre une position déployée dans laquelle elle s'étend à l'intérieur de la zone de chargement (14) et une position repliée de rangement, ce dispositif comportant:
- une deuxième cloison (24) montée articulée à une de ses extrémités sur la première cloison (12), et
- une troisième cloison (26) montée articulée à une de ses extrémités sur la seconde cloison (24),
**caracterisé en ce que** la première cloison (12) comporte un logement (32) apte à recevoir la deuxième cloison (24) et la troisième cloison (26) lorsque la première cloison (12) est en position repliée de rangement.

2. Dispositif escamotable selon la revendication 1, **caractérisé en ce que** la deuxième cloison (24) comprend un logement apte à recevoir la troisième cloison (26).

3. Dispositif selon l'une des revendications 1 ou 2, **caractérisé en ce que** l'autre extrémité de la troisième cloison (26) est montée articulée sur la paroi interne (16) du véhicule.

4. Dispositif escamotable selon l'une des revendications précédentes, **caractérisé en ce que** la première extrémité de la première cloison et l'autre extrémité de la troisième cloison (26) sont montées articulées sur la paroi (16) par des moyens démontables.

5. Dispositif escamotable selon l'une des revendications précédentes, **caractérisé en ce qu'**en position déployée, les trois cloisons (12, 24, 26) délimitent un compartiment (30) en forme de rectangle.

6. Dispositif escamotable selon l'une des revendications précédentes, **caractérisé en ce qu'** il comprend des moyens de verrouillage du dispositif (10) dans la position déployée se situant au moins au niveau d'une des articulations.

7. Dispositif escamotable selon l'une des revendications précédentes, **caractérisé en ce qu'**il comprend des moyens de retenue élastique (36) d'objets (38).

8. Dispositif escamotable selon la revendication 7, **caractérisé en ce que** les moyens de retenue (36) comprennent des moyens de fixation à chacune de ses extrémités apte à se verrouiller sur au moins une des cloisons (12, 24, 26).

9. Véhicule automobile **caractérisé en ce qu'**il comporte au moins un dispositif de compartimentage (10) d'une zone de chargement (14) selon l'une des revendications précédentes, ledit dispositif étant monté de manière à pivoter entre une position repliée de rangement contre une paroi interne (16) ou dans un évidemment (34) de forme sensiblement correspondante aménagé dans la paroi interne (16) et une position déployée dans laquelle il s'étend à l'intérieur de la zone de chargement (14) et au moins au dessus d'une surface (20) sensiblement horizontale du véhicule adjacente à la paroi interne (16).

10. Véhicule selon la revendication 9, **caractérisé en ce que** le dispositif (10) est monté sur la paroi interne (16) de sorte que, dans la position repliée de rangement, les cloisons (12, 24, 26) s'étendent sensiblement parallèlement à ladite paroi.

11. Véhicule selon l'une des revendications 9 ou 10, **caractérisé en ce qu'**il comprend au moins un autre dispositif de compartimentage (10) monté à articulation sur une paroi (16) de la zone de chargement (14) située à l'opposé de la paroi (16) pourvue du premier dispositif de compartimentage, lesdits dispositifs de compartimentage, sensiblement identiques, étant agencés de manière à pouvoir être reliés entre eux dans leur position déployée par au moins un élément de liaison.

## Claims

1. Folding device (10) for compartmenting a load area (14) of a motor vehicle comprising a first partition (12) hinge-mounted on a vertical surface (16) of the vehicle about a vertical axis (22) so that it can pivot between an unfolded position in which it lies inside the load area (14) and a folded position for stowing, this device including:
- a second partition (24) hinge-mounted at one of its ends on the first partition (12); and
- a third partition (26) hinge-mounted at one of its ends on the second partition (24),
**characterized in that** the first partition (12) includes a pocket (32) which can receive the second partition (24) and the third partition (26) when the first partition (12) is in the folded position for stowing.

2. Folding device according to Claim 1, **characterized in that** the second partition (24) comprises a pocket which can receive the third partition (26).

3. Folding device according to either of Claims 1 or 2, **characterized in that** the other end of the third partition (26) is hinge-mounted on the internal vertical surface (16) of the vehicle.

4. Folding device according to one of the preceding claims, **characterized in that** the first end of the first partition and the other end of the third partition (26) are hinge-mounted on the vertical surface (16) by removable means.

5. Folding device according to one of the preceding claims, **characterized in that** in the unfolded position, the three partitions (12, 24, 26) define a compartment (30) in the shape of a rectangle.

6. Folding device according to one of the preceding claims, **characterized in that** it comprises means of locking the device (10) in the unfolded position which are located at at least one of the hinges.

7. Folding device according to one of the preceding claims, **characterized in that** it comprises elastic means of retaining (36) objects (38).

8. Folding device according to Claim 7, **characterized in that** the means of retaining (36) comprise means of mounting at each of its ends which can be locked on at least one of the partitions (12, 24, 26).

9. Motor vehicle **characterized in that** it includes at least one device for compartmenting (10) a load area (14) according to one of the preceding claims, the said device being mounted so that it can pivot between a folded position for stowing against an internal vertical surface (16) or in a recess (34) of generally corresponding shape made in the internal vertical surface (16) and an unfolded position in which it lies inside the load area (14) and at least above a generally horizontal surface (20) of the vehicle adjacent to the internal vertical surface (16).

10. Vehicle according to Claim 9, **characterized in that** the device (10) is mounted on the internal vertical surface (16) so that, in the folded position for stowing, the partitions (12, 24, 26) lie generally parallel to the said vertical surface.

11. Vehicle according to either of Claims 9 or 10, **characterized in that** it comprises at least one other device for compartmenting (10) mounted with a hinge on a vertical surface (16) of the load area (14) located opposite the vertical surface (16) provided with the first device for compartmenting, the said devices for compartmenting, generally identical, being arranged so as to be able to be connected together in their unfolded position by at least one connecting element.

## Patentansprüche

1. Einklappbare Vorrichtung (10), um den Laderaum (14) eines Kraftfahrzeugs abzuteilen, umfassend eine erste Trennwand (12), die gelenkig an einer Wand (16) des Fahrzeugs um eine Vertikalachse (22) zwischen einer ausgeklappten Position, in der sie sich im Inneren des Laderaums (14) erstreckt, und einer eingeklappten Verstauungsposition montiert ist, wobei die Vorrichtung umfasst:
- eine zweite Trennwand (24), die gelenkig an einem ihrer Enden an der ersten Trennwand (12) montiert ist, und
- eine dritte Trennwand (26), die gelenkig an einem ihrer Enden an der zweiten Trennwand (24) montiert ist,
**dadurch gekennzeichnet, dass** die erste Trennwand (12) eine Lagerung (32) umfasst, die die zweite Trennwand (24) und die dritte Trennwand (26) aufnehmen kann, wenn die erste Trennwand (12) in der eingeklappten Verstauungsposition ist.

2. Einklappbare Vorrichtung nach Anspruch 1, **dadurch gekennzeichnet, dass** die zweite Trennwand (24) eine Lagerung umfasst, die die dritte Trennwand (26) aufnehmen kann.

3. Vorrichtung nach einem der Ansprüche 1 oder 2,
**dadurch gekennzeichnet, dass** das andere Ende der dritten Trennwand (26) gelenkig an der Innenwand (16) des Fahrzeugs montiert ist.

4. Einklappbare Vorrichtung nach einem der vorhergehenden Ansprüche, **dadurch gekennzeichnet, dass** das erste Ende der ersten Trennwand und das andere Ende der dritten Trennwand (26) gelenkig an der Wand (16) durch abnehmbare Mittel montiert sind.

5. Einklappbare Vorrichtung nach einem der vorhergehenden Ansprüche, **dadurch gekennzeichnet, dass** in der ausgeklappten Position die drei Trennwände (12, 24, 26) ein rechteckiges Abteil (30) begrenzen.

6. Einklappbare Vorrichtung nach einem der vorhergehenden Ansprüche, **dadurch gekennzeichnet, dass** sie Mittel zur Verriegelung der Vorrichtung (10) in der ausgeklappten Position umfasst, die sich mindestens im Bereich eines der Gelenke befinden.

7. Einklappbare Vorrichtung nach einem der vorhergehenden Ansprüche, **dadurch gekennzeichnet, dass** sie elastische Mittel (36) zum Halten von Gegenständen (38) umfasst.

8. Einklappbare Vorrichtung nach Anspruch 7, **dadurch gekennzeichnet, dass** die Haltemittel (36) Befestigungsmittel an jedem ihrer Enden umfassen, das an mindestens einer der Trennwände (12, 24, 26) verriegelt werden kann.

9. Kraftfahrzeug, **dadurch gekennzeichnet, dass** es mindestens eine Vorrichtung (10) zum Abteilen eines Laderaums (14) nach einem der vorhergehenden Ansprüche umfasst, wobei die Vorrichtung derart montiert ist, dass sie zwischen einer an eine Innenwand (16) oder in eine in der Innenwand (16) vorgesehene Aussparung (34) von im Wesentlichen entsprechender Form eingeklappten Verstauungsposition und einer ausgeklappten Position, in der sie sich im Inneren des Laderaums (14) und mindestens über einer im Wesentlichen horizontalen Fläche (20) des Fahrzeugs, die an die Innenwand angrenzt (16), erstreckt, schwenkt.

10. Fahrzeug nach Anspruch 9, **dadurch gekennzeichnet, dass** die Vorrichtung (10) an der Innenwand (16) montiert ist, so dass sich in der eingeklappten Verstauungsposition die Trennwände (12, 24, 26) im Wesentlichen parallel zur Wand erstrecken.

11. Fahrzeug nach einem der Ansprüche 9 oder 10, **dadurch gekennzeichnet, dass** sie mindestens eine weitere Abteilungsvorrichtung (10) umfasst, die gelenkig an einer Wand (16) des Laderaums (14) montiert ist, der sich gegenüber der Wand (16) erstreckt, die mit der ersten Abteilungsvorrichtung versehen ist, wobei die im Wesentlichen identischen Abteilungsvorrichtungen derart angeordnet sind, dass sie miteinander in ihrer ausgeklappten Position durch mindestens ein Verbindungselement verbunden werden können.
